# EUROPÄISCHE PATENTSCHRIFT

(11) **EP 1 427 619 B1**
(45) Veröffentlichungstag und Bekanntmachung des Hinweises auf die Patenterteilung: **15.12.2010**
(21) Anmeldenummer: 02762471.7
(22) Anmeldetag: 06.09.2002
(51) Int. Cl.: B60T 8/00

(54) **Verfahren zur Fahrzustandsstabilisierung eines Nutzfahrzeugverbandes**
Method for stabilizing the driving state of a utility vehicle combination
Procédé de stabilisation de la condition de conduite d'un assemblage de véhicules utilitaires

(30) Priorität: 10.09.2001 DE 10144299
(43) Veröffentlichungstag der Anmeldung: 16.06.2004
(73) Patentinhaber: KNORR-BREMSE Systeme für Nutzfahrzeuge GmbH, 80809 München (DE)
(72) Erfinder: HORN, Matthias, 71229 Leonberg (DE); HUMMEL, Stefan, 70191 Stuttgart (DE); HECKER, Falk, 71706 Markgroeningen (DE); GÜCKER, Ulrich, 71701 Schwieberdingen (DE)
(86) Internationale Anmeldenummer: PCT/EP2002/009979
(87) Internationale Veröffentlichungsnummer: WO 2003/022650

(56) Entgegenhaltungen:
- EP-A- 1 167 141
- DE-A- 10 019 150
- DE-A- 19 964 058

## Beschreibung

Die vorliegende Erfindung betrifft ein Verfahren zur Stabilisierung des Fahrzustandes eines aus einem Zugfahrzeug und einem Anhänger bestehenden Fahrzeugverbandes gemäß dem Oberbegriff des Patentanspruches 1.

Ein solches Verfahren ist aus der EP 0 433 858 A1 bekannt. Bei einem Fahrzeugverbund wird über Sensoren, wie z.B. einem Knickwinkelsensor, überprüft, ob ein instabiler Fahrzeugzustand mit einem "Ausschwingen" des Anhängers vorliegt. Ist dies der Fall, so wird der Bremsdruck des Anhängers rasch auf "Null" abgesenkt und anschließend nach einer vorgegebenen Zeitdauer langsamer wieder angehoben. Optional kann der dort beschriebene Fahrzeugverbund auch mit einer ABS-Funktion ausgestattet sein.

Nutzfahrzeuge werden in Zukunft in zunehmendem Maße mit einem Antiblockiersystem (ABS), einer Antriebsschlupfregelung (ASR) und einem elektronischen Stabilitätsprogramm (ESP) ausgerüstet sein, um das Fahrzeug bzw. den Fahrzeugverband in kritischen Fahrsituationen zu stabilisieren. Durch ABS- und ASR-Systeme werden die Bremsdrücke an einzelnen Radbremszylindern individuell so gesteuert, daß ein Blockieren bzw. ein Durchdrehen der Räder vermieden wird.

Mit Hilfe eines ESP-Systems werden in kritischen, d.h. instabilen Fahrzuständen, insbesondere bei Schleudergefahr, an einem oder mehreren Radbremszylindern des Zugfahrzeuges und/oder des Anhängerfahrzeuges elektronisch aktiv Bremsdrücke eingesteuert, um das Fahrzeug bzw. den Fahrzeugverband zu stabilisieren. Dabei kann es je nach Fahrzustand auch zu längeren Bremseingriffen am Anhänger bzw. Auflieger kommen. Unter ungünstigen Verhältnissen, insbesondere bei schlechter Bereifung bzw. mangelhaft funktionierendem ABS, können solche längeren Bremseingriffe zum seitlichen "Ausschwingen" des Anhängers bzw. Aufliegers führen.

Dieses Problem tritt insbesondere bei Anhängern bzw. Sattelaufliegern auf, die in Kurven gebremst werden. Bremsungen führen dann zu einem Verlust der Seitenführung, was ein Ausschwingen zur Folge haben kann. Ein "Ausschwingen" kann sowohl bei einer Bremsung durch den Fahrer als auch bei einem elektronischen Bremseingriff durch ESP erfolgen.

Aufgabe der Erfindung ist es, das Ausschwingen des Anhängers zu vermeiden.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Das Grundprinzip der Erfindung besteht darin, während Bremsungen des Anhängerfahrzeuges die Fahrstabilität des Fahrzeugverbandes zu überwachen und bei Vorliegen eines instabilen Fahrzustandes den Fahrzeugverband durch zyklisches bzw. taktweises Reduzieren der Radbremsmomente des Anhängers oder des Anhängerbremsdruckes zu stabilisieren.

Mit anderen Worten werden die Radbremsmomente des Anhängers bzw. der Bremsdruck zum Anhänger bzw. Auflieger "moduliert". "Modulieren" bedeutet, daß während der Betätigung der Anhängerbremsen immer wieder kurze Phasen mit keinem oder nur geringem Bremsdruck "eingeschoben" werden. Dies kann in Abhängigkeit von der Fahrsituation geschehen, d.h. bei instabilem Zugfahrzeug und dadurch erforderlichem ESP-Eingriff am Anhänger/Auflieger wird der Bremsdruck des Anhängers bzw. Aufliegers getaktet angesteuert.

Vorzugsweise erfolgt eine Modulierung bzw. Taktung der Anhängerradbremsmomente nur in wirklich kritischen Fahrsituationen. Hierzu muß der "Bewegungszustand" des Fahrzeugverbandes überwacht werden. Der Bewegungszustand, bzw. die momentane Stabilität eines Fahrzeugverbandes ist eine komplizierte Vektorgröße, die sich näherungsweise durch eine Vielzahl von Veränderlichen beschreiben läßt.

Charakteristisch für die Stabilität einer Fahrzeugbewegung sind insbesondere die Fahrzeuggeschwindigkeit bzw. die Drehzahlen einzelner Fahrzeugräder, Lenkwinkel, Knickwinkel zwischen Anhänger und Zugfahrzeug, Knickwinkelgeschwindigkeit, Lateralbeschleunigung, Achslastverteilung etc.

Zur Messung bzw. Bestimmung dieser Größen sind auf dem Zugfahrzeug bzw. auf dem Anhänger verschiedene Sensoren vorgesehen, wie z.B. Raddrehzahlsensoren, Gierratensensoren etc. Für die Erkennung der "Ausschwinggefahr" können auch Sensoren zur Messung bzw. Ermittlung des Knickwinkels zwischen dem Anhänger und der zugmaschine vorgesehen sein.

Die Taktung bzw. Modulierung der Anhängerradbremsmomente kann sowohl bei einer Bremsung durch den Fahrer als auch bei einem ESP-Bremseingriff erfolgen.

Die Erfindung ist insbesondere für einen Sattelzug mit einer mit ESP ausgerüsteten Sattelzugmaschine geeignet. Vorzugsweise ist der Sattelzug mit einem Sensor zur Messung des Knickwinkels zwischen der Zugmaschine und dem Auflieger ausgerüstet.

Bei einer ESP-gesteuerten Bremsung des Aufliegers, z.B. auf einer Fahrbahn mit niedrigem Reibwert, wird der vom ESP eingesteuerte Bremsdruck zum Auflieger in bestimmten Zeitabständen reduziert. Dadurch wird - wie oben erläutert - der Auflieger stabilisiert und ein Ausschwingen vermieden.

Wenn kein Knickwinkelsensor vorhanden ist, kann der Knickwinkel auf der Basis anderer zur Verfügung stehender Fahrzustandsgrößen und eines spezifisch vorgegebenen mathematisch-physikalischen Fahrzeugmodells geschätzt werden. Hierzu können Sensoren vorgesehen sein, welche die "Orientierung" der Zugmaschine und des Aufliegers messen, woraus der Knickwinkel bestimmbar ist. Ferner können Signale ausgewertet werden, die von einem im Fahrzeug vorhandenen Navigations- bzw. Kommunikationssystem geliefert werden.

Auf der Grundlage des vorgegebenen fahrzeugspezifischen mathematisch-physikalischen Modells ermittelt das ESP einen Sollwert für den Knickwinkel zwischen der Zugmaschine und dem Auflieger.

Wenn der ermittelte Knickwinkel betragsmäßig deutlich über dem Sollwert liegt, d.h. wenn eine signifikante Abweichung zwischen Soll- und Istwert besteht und der Auflieger gleichzeitig gebremst wird, ist davon auszugehen, daß die Gefahr des Ausschwingens des Aufliegers besteht.

Zur Stabilisierung dieses instabilen Fahrzustandes wird durch das ESP der Bremsdruck zum Auflieger in bestimmten Zeitabständen reduziert. Dadurch können die Räder des Aufliegers wieder, "hochlaufen", d.h. beschleunigen, wodurch sich Seitenkräfte aufbauen und der Auflieger stabilisiert wird.

Wenn kein Sensor zur Messung des Knickwinkels zwischen dem Anhänger und der Zugmaschine zur Verfügung steht und der Knickwinkel auch nicht in anderer weise bestimmt bzw. geschätzt werden kann, dann kann dem Problem des Ausschwingens auch "präventiv" begegnet werden. Das heißt, die getaktete Einsteuerung des Bremsdrucks bzw. die wiederholte "Bremskraftreduzierung" erfolgt in bestimmten Situationen, z.B. bei sehr glatter Fahrbahn, und zwar ohne Kenntnis des Knickwinkels. Es kann vorgesehen sein, daß hierbei nur die vom Zugfahrzeug bereitgestellten Informationen berücksichtigt werden.

Das Signal zur Reduzierung der Radbremsmomente bzw. des Anhängerbremsdrucks kann z.B. pneumatisch, elektrisch oder über Funk vom Zugfahrzeug zum Anhängerfahrzeug übertragen werden.

Im folgenden wird die Erfindung anhand eines Ausführungsbeispieles im Zusammenhang mit der Zeichnung ausführlicher erläutert.

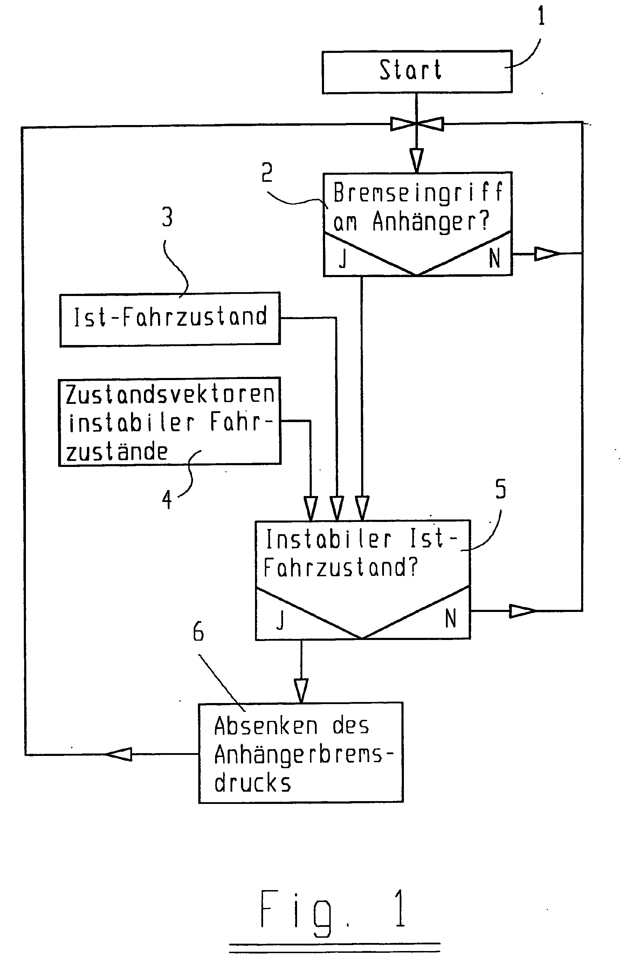

Die einzige Fig. 1 zeigt ein Flußdiagramm des der Erfindung zugrundeliegenden Verfahrens.

Ausgehend von einem Startschritt 1 wird in einem Schritt 2 ständig überprüft, ob am Anhänger ein Bremseingriff erfolgt. Erfolgt kein Bremseingriff, so wird Schritt 2 erneut durchlaufen.

Erfolgt hingegen ein Bremseingriff am Anhänger, so wird in Schritt 3 die "Stabilität" des Ist-Fahrzustandes gemessen, z.B. durch Messung des Knickwinkels zwischen dem Zugfahrzeug und dem Anhängerfahrzeug, von Raddrehzahlen, Längs- und Querbeschleunigungen, Radschlüpfen, Achslastverteilung, Fahrbahnneigung etc.

In der Bremselektronik des Fahrzeuges sind diverse "Zustandsvektoren" gespeichert, die kritische Fahrzustände charakterisieren. Solche "kritischen Fahrzustandsvektoren" können durch einzelne bzw. Kombinationen der oben genannten Fahrzustandsgrößen gebildet sein. Die gespeicherten Fahrzustandsvektoren sind in Fig. 1 schematisch durch den Block 4 angedeutet.

In Schritt 5 wird der Ist-Fahrzustand mit den vorgegebenen kritischen Fahrzustandsvektoren verglichen. Ergibt der Vergleich, daß kein instabiler Fahrzustand vorliegt, so wird zu Schritt 2 zurückgesprungen, d.h. der Bremseingriff durch den Fahrer bzw. das ESP wird nicht "modifiziert".

Liegt hingegen ein kritischer Fahrzustand vor, so werden in Schritt 6 die Radbrmesmomente des Anhängers bzw. der Anhängerbremsdruck, moduliert, d.h. getaktet. Der Anhängerbremsdruck bzw. die Radbremsmomente werden also kurzzeitig abgesenkt. Anschließend wird zu Schritt 2 zurückgesprungen und die gesamte Überwachungsroutine erneut durchlaufen.

## Patentansprüche

1. Verfahren zur Stabilisierung des Fahrzustandes eines aus einem Zugfahrzeug und einem Anhänger bestehenden Fahrzeugverbandes mit folgenden Schritten:
a) Überwachen, ob am Anhänger ein Bremseingriff (2) vorliegt;
b) Sensieren (3) einer oder mehrerer die momentane Stabilität des Fahrzeugverbandes charakterisierender Fahrzustandsgrößen;
c) Ermitteln, ob ein instabiler Fahrzustand vorliegt oder bevorsteht; und
d) Absenken (6) der Bremsmomente an Anhängerrädern, wenn bei einem Bremseingriff in Schritt c) ein instabiler Fahrzustand erkannt wird,
**dadurch gekennzeichnet**,
e) daß im Schritt d) der Anhängerbremsdruck **dadurch** moduliert wird, daß während der Betätigung der Anhängerbremsen zyklisch kurze Pausen mit keinem oder nur geringem Bremsdruck eingeschoben werden;
f) daß im Schritt b) mittels eines vorgegebenen mathematisch-physikalischen Fahrzeugmodells der Knickwinkel zwischen dem Zugfahrzeug und dem Anhängerfahrzeug näherungsweise ermittelt wird und daß der ermittelte Knickwinkel mit einem in Abhängigkeit vom momentanen Fahrzustand ermittelten Soll-Knickwinkel, der einen stabilen Fahrzustand charakterisiert, verglichen wird; und
g) daß in Schritt c) Maßzahlen ermittelt werden, welche die aktuelle oder drohende Instabilität beschreiben und die Bremsmomente an den Anhängerrädern in Abhängigkeit von den ermittelten Maßzahlen hinsichtlich ihrer Amplitude und ihres Zeitverhaltens moduliert werden.

2. Verfahren nach Anspruch 1 **dadurch gekennzeichnet,**
**daß** in Schritt c) ein Vergleich (5) durchgeführt wird, zwischen der einen bzw. mehreren sensierten Fahrzustandsgrößen und einer bzw. mehreren zugeordneten, einen instabilen Fahrzustand charakterisierenden Fahrzustandsgrößen.

3. Verfahren nach einem der Ansprüche 1 bis 2, **dadurch gekennzeichnet,**
**daß** der Anhängerbremsdruck bei einem ESP-Eingriff abgesenkt wird.

4. Verfahren nach einem der Ansprüche 1 bis 3, **dadurch gekennzeichnet,**
**daß** der Anhängerbremsdruck bei einer Bremsbetätigung durch den Fahrer abgesenkt wird.

5. Verfahren nach einem der Ansprüche 1 bis 4, **dadurch gekennzeichnet,**
**daß** in Schritt a) die Stärke des Bremseingriffs am Anhänger ermittelt wird und daß die Absenkung der Bremsmomente in Abhängigkeit von der Stärke des Bremseingriffs erfolgt.

6. Verfahren nach einem der Ansprüche 1 bis 5, **dadurch gekennzeichnet,**
**daß** in Schritt d) die Absenkung in Form des PulsPausen-Verhältnisses und der Absenkungsamplitude durch den Grad der aktuellen bzw. drohenden Instabilität des Fahrzustandes moduliert wird.

7. Verfahren nach einem der Ansprüche 1 bis 6, **dadurch gekennzeichnet,**
**daß** in Schritt d) die Absenkung mit anderen Sicherheits-, Assistenz- bzw. Komfortsystemen des Fahrzeugs abgestimmt wird.

## Claims

1. Method for stabilising the driving state of a vehicle combination consisting of a tow car and a trailer, comprising the following steps:
a) the monitoring for a braking intervention (2) on the trailer;
b) the sensing (3) of one or more driving state variables characterising the stability of the vehicle combination;
c) the determination whether an unstable driving state is present or imminent; and
d) the lowering of the braking torque at trailer wheels, if an unstable driving state is detected in a braking intervention in step c).
**characterised in that**
e) in step d), the trailer brake pressure is modulated by cyclically inserting short breaks with no or low brake pressure during the actuation of the trailer brakes;
f) in step b), the articulation angle between the tow car and the trailer is determined by approximation by means of a preset mathematical-physical vehicle model, and **in that** the articulation angle thus determined is compared to a desired articulation angle determined in dependence on the current driving state, which characterises a stable driving state; and
g) in step c), dimensional values are determined which describe current or imminent instability, and **in that** the braking torques at the trailer wheels are modulated in dependence on the determined dimensional values in terms of their amplitude and their time response.

2. Method according to claim 1, **characterised in that** in step c), a comparison is carried out between the one or more sensed driving state variable(s) and one or more assigned driving state variable(s) which characterise(s) an unstable driving state.

3. Method according to claim 1 or 2, **characterised in that** the trailer brake pressure is lowered in an ESP intervention.

4. Method according to any of claims 1 to 3, **characterised in that** the trailer brake pressure is lowered if the driver operates the brakes.

5. Method according to any of claims 1 to 4, **characterised in that** in step a), the power of the braking intervention at the trailer is determined, and **in that** the braking torques are lowered in dependence on the power of the braking intervention.

6. Method according to any of claims 1 to 5, **characterised in that** in step d), the lowering action is modulated in the form of the pulse-pause ratio and the lowering amplitude by the degree of the current or imminent instability of the driving state.

7. Method according to any of claims 1 to 6, **characterised in that** in step d), the lowering action is matched to other safety, assistance or comfort systems of the vehicle.

## Revendications

1. Procédé de stabilisation de l'état de marche d'un convoi de véhicules constitué d'un véhicule de traction et d'une remorque, comprenant les stades suivantes :
a) on contrôle s'il y a une action (2) de freinage sur la remorque ;
b) on détecte (3) une ou plusieurs grandeurs de l'état de marche, caractérisant la stabilité instantanée du convoi de véhicules ;
c) on détermine s'il y a ou s'il va y avoir une condition instable ; et
d) on diminue (6) les couples de freinage sur les roues de la remorque si, lors d'une action de freinage au stade c), on détecte un état de marche instable,
**caractérisé**
e) Au stade d) on module la pression de freinage de la remorque en introduisant, pendant l'actionnement des freins de la remorque, des pauses courtes cycliquement, sans pression de freinage ou n'ayant qu'une petite pression de freinage ;
f) en ce qu'au stade b) on détermine approximativement au moyen d'un modèle de véhicule prescrit mathématico-physique, l'angle de flexion entre le véhicule de traction et le véhicule de remorque et en ce que l'on compare l'angle de flexion déterminé à un angle de flexion de consigne déterminé en fonction de l'état de marche instantané et caractérisant un état de marche stable ; et
g) on détermine au stade c) des nombres de mesure, qui décrivent l'instabilité instantanée ou menaçante et on module les couples de freinage sur les roues de la remorque en fonction des nombres de mesure déterminée en ce qui concerne leur amplitude et leur comportement dans le temps.

2. Procédé suivant la revendication 1, **caractérisé en ce qu'**au stade c) on effectue une comparaison (5) entre la une ou les plusieurs grandeurs d'état de marche détectées et une ou plusieurs grandeurs d'état de marche associées et caractérisant un état de marche instable.

3. Procédé suivant l'une des revendications 1 à 2, **caractérisé en ce qu'**on abaisse la pression de freinage de la remorque pour une action ESP.

4. Procédé suivant l'une des revendications 1 à 3, **caractérisé en ce que** la pression de freinage de la remorque est abaissée par le conducteur lors d'un actionnement du frein.

5. Procédé suivant l'une des revendications 1 à 4, **caractérisé en ce qu'**au stade a) on détermine l'intensité de l'action de freinage sur la remorque et **en ce que** l'on effectue la diminution des couples de freinage en fonction de l'intensité de l'action de freinage.

6. Procédé suivant l'une des revendications 1 à 5, **caractérisé en ce qu'**au stade d) on module la diminution sous la forme du rapport impulsion-pause et de l'amplitude de diminution par le degré d'instabilité instantanée ou menaçante de l'état de marche.

7. Procédé suivant l'une des revendications 1 à 6, **caractérisé en ce qu'**au stade d) on adapte la diminution à d'autres systèmes de sécurité, d'assistance ou de confort du véhicule.
